# EUROPÄISCHE PATENTSCHRIFT

(11) **EP 0 853 872 B1**
(45) Veröffentlichungstag und Bekanntmachung des Hinweises auf die Patenterteilung: **26.03.2003**
(21) Anmeldenummer: 97203931.7
(22) Anmeldetag: 15.12.1997
(51) Int. Cl.: A01D 84/00

(54) **Vorrichtung zur Pflanzenbehandlung**
Device for treatment of crop
Dispositif pour le traitement des récoltes

(30) Priorität: 13.12.1996 NL 1004768
(43) Veröffentlichungstag der Anmeldung: 22.07.1998
(73) Patentinhaber: Lorier, Abraham, 4353 CA Serooskerke (NL)
(72) Erfinder: Lorier, Abraham, 4353 CA Serooskerke (NL)
(74) Vertreter: Bartelds, Erik

(56) Entgegenhaltungen:
- EP-A- 0 255 458
- BE-A- 692 628
- DE-A- 2 364 657
- FR-A- 2 342 018
- GB-A- 2 089 635
- GB-A- 2 139 865
- GB-A- 2 186 473
- US-A- 2 660 022
- US-A- 2 664 684
- US-A- 2 827 745

## Beschreibung

Die Erfindung betrifft eine Vorrichtung zur Bearbeitung von auf dem Boden liegenden Mähgut, die mit einem verfahrbaren Rahmen versehen ist, in der Fahrtrichtung gesehen an der Frontseite des Rahmens angebrachten Mitteln zum Aufnehmen des Mähguts vom Boden und im Abstand über dem Boden in dem Rahmen enthaltenen bewegbaren Bearbeitungsmitteln, wobei der Rahmen an die Aufnahmemittel anschließende Führungsmittel aufweist, und die Bearbeitungsmittel mit den Führungsmitteln zusammenwirkende Schüttelmittel umfassen sowie Rechmittel zum in Querrichtung erfolgenden Abführen des aufgenommenen Mähguts und zum Sammeln des aufgenommenen Mähguts in einer Schwade.

Eine Vorrichtung, die dient zur Bearbeitung von auf dem Boden liegendem Mähgut, und mit der das Mähgut vom Boden aufgenommen, im Abstand darüber verarbeitet und danach wieder auf den Boden zurückgelegt wird, ist aus der BE 692 628 A bekannt.

Die Bearbeitung von Mähgut ist allgemein bekannt. So wird zum Beispiel Mähgut, wie gemähtes Gras, das auf einer Wiese liegt, geschüttelt, um die Trocknung davon zu fördern, oder gerecht, um das getrocknete Mähgut einfach zusammenbringen zu können. Das getrocknete und gesammelte Gras wird letztendlich als Winterfutter für das Vieh verwendet.

Ein Nachteil des Durcheinanderschüttelns oder Zusammenrechens von Gras, das auf der Wiese liegt, ist der, daß mit diesem Schütteln oder Rechen des Grases auch Teile des Bodens aufgewühlt werden, die dann mit dem geschüttelten oder gerechten Gras vermischt werden. Es ist dabei insbesondere zu denken an Klumpen Erde und andere Verunreinigungen. Da das Gras nach dem Trocknen aufgenommen wird, um zu Viehfutter verarbeitet zu werden, besteht die Gefahr, daß durch Schütteln oder Rechen des Grases auf dem Boden die Verunreinigungen letztendlich in das Viehfutter geraten und somit das Vieh erreichen. Dadurch geht auf jeden Fall der Nährwert pro Gewichtseinheit des Viehfutter herunter, während darüber hinaus die Gefahr besteht, daß die Gesundheit des Viehs durch die Verunreinigungen beeinträchtigt wird. Darüber hinaus wird das getrocknete Gras, bevor es zu Viehfutter verarbeitet wird, im allgemeinen noch verkleinert, wobei allerdings als Folge der darin befindlichen Verunreinigungen eine erhebliche Abnutzung der Zerkleinerungsvorrichtung eintreten kann.

Aus diesem Grunde ist schon vorgeschlagen worden, das Mähgut für solche Bearbeitungen vom Boden hochzunehmen. Indem die Schüttel- oder Rechbewegung, wobei das Mähgut intensiv bewegt wird, im Abstand über dem Boden ausgeführt wird, kann das Aufwühlen und mit dem Mähgut Vermischen von Verunreinigungen und dergleichen aus dem Boden vermieden werden, wodurch das Mähgut sauberer bleibt.

Bei dem konventionellen Verfahren werden allerdings zum Schütteln und Rechen gesonderte Maschinen angewandt. Dies stellt einen Landwirten vor hohe Investitionen. Deswegen wird in BE 692 628 A schon eine Vorrichtung vorgeschlagen, mit der das Mähgut aufgenommen und nach Wahl geschüttelt oder gerecht werden kann. Diese bekannte Vorrichtung weist einen Rahmen auf mit einer an der Vorderseite angeordnete liegende Achse, um der eine Vielzahl von Fingern rotierbar sind. Diese Finger nehmen das Mähgut vom Boden auf und befördern es in einen kanal, in dem zwei gegensätzlich rotierharen Schüttelglieder angeordnet sind. Jedes Schüttelglied weist eine Vielzahl von Fingern auf, die um stehende Achsen rotierbar sind. An der Austragseite der Vorrichtung sind zwei Führungsklappen angeordnet, die ebenfalls um stehende Achsen schwenkbar sind. Durch Schwenken dieser Führungsklappen wird das geschüttelte Mähgut entweder über die ganze Breite der Vorrichtung verteilt (Schütteln) oder in einer Schwade gesammelt (Rechen).

Eine konventionelle Rechvorrichtung gemäß dem Oberbegriff von Anspruch 1 ist aus der EP 0 255 458 A1 bekannt. Diese Vorrichtung weist um eine liegende Achse rotierbaren Aufnahmemittel auf, sowie Rechmittel zum in Querrichtung Abführen und in einer Schwade Hinlegen des aufgenommenen Mähguts.

Die Erfindung bezweckt eine verbesserte Vorrichtung zum Schütteln oder Rechen von Mähgut bereitzustellen. Nach der Erfindung wird dies bei einer Vorrichtung des eingangs beschriebenen Typs dadurch erreicht, daß die Rechmittel zwischen einer Ruheposition, in der das aufgenommene Mähgut die Rechmittel passiert, und einer Betriebsposition, in der das Mähgut von den Rechmitteln in Querrichtung abgeführt wird verstellbar sind.

Mit einer solchen Vorrichtung kann das Mähgut in einfacher Weise nach Wahl geschüttelt oder gerecht werden, ohne daß dazu mehrere gesonderte Maschinen eingesetzt werden müssen. Dabei wird das aufgenommene Mähgut, wenn die Rechmittel ihre Ruheposition einnehmen, geschüttelt werden, und danach hinter der Vorrichtung wieder hingelegt werden. Wenn die Rechmittel dagegen in ihrer Betriebsposition stehen, wird das aufgenommene Mähgut zur Seite der Vorrichtung hin abgeführt und in einer Schwade gesammelt.

Die Führungsmittel können zum Beispiel die Gestalt einer hinter den Aufnahmemitteln angebrachten Platte haben, wo das Mähgut hinaufgeworfen wird und auf der dann die Schüttelbehandlung ausgeführt wird. Die Rechmittel können zum Beispiel die Form eines Bandförderers, eines Fingerförderers oder dergleichen haben.

Sowohl die Aufnahmemittel als auch die Schüttelmittel können eine Reihe um eine oder mehrere Achsen rotierbare Finger, zum Beispiel in Form von Bürstenelementen, aufweisen. Dabei werden die Finger der Aufnahmemittel vorzugsweise um eine liegende Achse rotierbar sein, während vorzugsweise die Finger der Schüttelmittel um eine stehende Achse rotierbar sind. Die Rechmittel, die zwischen einer Ruhestellung und einer Betriebsstellung bewegbar sind, können zum Beispiel schwenkbar in dem Rahmen aufgenommen sein oder sie können mit einer bewegbaren Abdeckplatte versehen sein.

Um das von den Aufnahmemitteln nach oben geführte Mähgut zu den Rechmitteln hin zu transportieren, können dazwischen noch Weitergabemittel, zum Beispiel in der Form eines oder mehrerer Bürstenelemente vorhanden sein. Diese Weitergabemittel können gegebenenfalls mit den Schüttelmitteln kombiniert sein.

Die Erfindung wird nun an Hand von zwei Beispielen erläutert, wobei auf die beigefügte Zeichnung verwiesen wird, worin:
Figur 1 eine Seitenansicht einer ersten Ausführungsform der Vorrichtung nach der Erfindung während der Ausführung einer Rechbearbeitung ist.
Figur 2 eine mit der Figur 1 übereinstimmende Ansicht der Vorrichtung während des Ausführens einer Schüttelbearbeitung ist.
Figur 3 eine perspektivische Ansicht einer alternativen Ausführungsform der Vorrichtung nach der Erfindung ist;

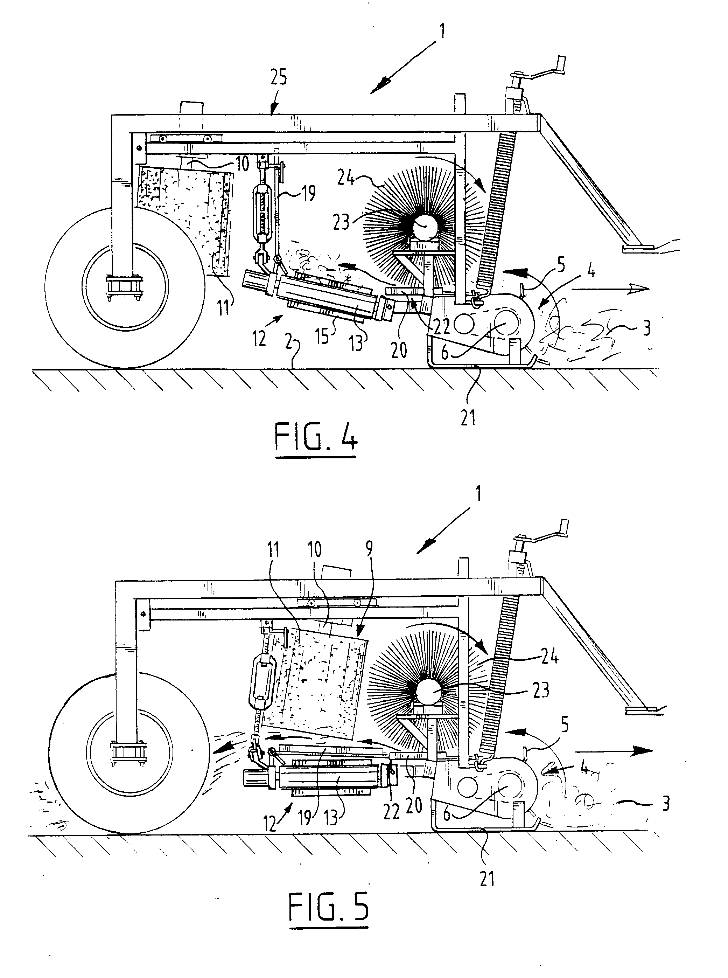

Figur 4 eine Seitenansicht der Vorrichtung von Figur 3 während einer Rechbearbeitung ist und
Figur 5 eine mit der Figur 4 übereinstimmende Ansicht während einer Schüttelbearbeitung ist.

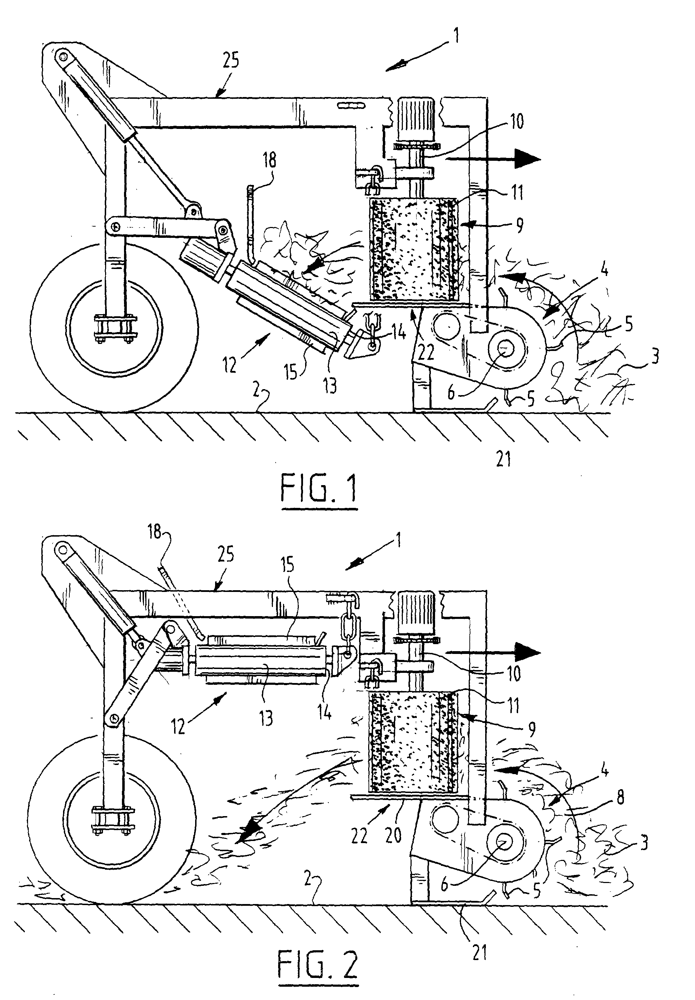

Eine Vorrichtung zum Bearbeiten von auf einem Boden 2 liegendem Mähgut 3, zum Beispiel gemähtem Gras, ist mit einem Rahmen 25 versehen, auf dem an der Vorderseite Aufnahmemittel 4 angebracht sind, in Form von Fingern 5, die Rotierbar auf einer liegenden Achse 6 sind (Figur 1). Der Rahmen kann zum Beispiel an der Vorderseite oder an der Rückseite eines Ackerschleppers angebracht werden, und kann mit Führungsrädern oder Führungskufen 21 versehen sein. Die Vorrichtung könnte allerdings auch vollständig selbstfahrend ausgeführt werden. In dem gezeigten Beispiel sind jeweils vier Finger angebracht auf einer rotierenden Scheibe 7, wobei zwischen zwei rotierenden Scheiben 7 jeweils eine stillstehende Scheibe 8 angebracht ist. Das Mähgut 3 wird durch diese Aufnahmemittel 4 vom Boden 2 aufgenommen und den Schüttelmitteln 9 zugeführt.

Die Schüttelmittel 9 werden in dem gezeigten Beispiel von einer Anzahl um parallele stehende Achsen 10 in entgegengesetzter Richtung rotierbare Bürstenelemente 11 gebildet, aber auch andere Mechanismen mit rotierbaren Fingern, wie zum Beispiel waagerechte Bürsten mit V-förmigen Profil sind vorstellbar. Auch könnten zum Beispiel pneumatische Schüttelmittel angewandt werden. Unter den Schüttelmitteln 9 sind noch damit zusammenwirkende Führungsmittel 20 angebracht, hier in der Form einer flachen Platte 22. Auch anders gebildete Oberflächen oder sogar zum Beispiel eine Unterbürste oder -rolle könnten ebenfalls als Führung angewandt werden. Das Mähgut 3 wird durch die rotierende Bewegung der Bürsten 11 zwischen zwei daneben gelegene Bürsten 11 gezogen und daraufhin von ihnen nach hinten weggeschleudert, wobei es sich an dem Boden 2 verbreitet. So wird das Mähgut 3 also intensiv durcheinander geschüttelt und danach hinter der Vorrichtung wieder an nahezu derselben Stelle wieder hingelegt, wo es aufgenommen wurde, wobei das Mähgut im allgemeinen in einer anderen Stellung auf den Boden 2 gelangen wird, als es in erster Linie gelegen hat. Auf diese Weise wird die Trocknung gefördert.

Wenn das Mähgut 3 trocken genug ist, kann es zu Viehfutter verarbeitet werden. Zu diesem Zwecke wird es im allgemeinen gerecht, das heißt in Sammelreihen oder Schwaden 16 gehäufelt, die danach aufgenommen werden, um nach der etwaigen Zerkleinerung in einem Silo eingelagert und zusammengepreßt zu werden. Dieses Silomähgut wird in der Winterzeit als Viehfutter verwendet.

Um die Einrichtung 1 ebenfalls einsetzen zu können zum in Schwaden 16 Häufeln des Mähguts 3, ist diese .weiter mit Rechmitteln 12 versehen, in dem gezeigten Beispiel in der Form eines Förderbands 12, das um zwei Wenderollen 14 rotierbar ist, und versehen mit Mitnehmerelementen 15. Die Rechmittel 12 sind dabei verstellbar gegenüber den Aufnahmemitteln 4 zwischen einer Ruhestellung (Figur 1), in der das Mähgut die Rechmittel 12 passieren kann und die Vorrichtung 1 somit als Schüttler tätig ist, und einer Betriebsstellung, in der durch die Aufnahmemittel 4 nach oben gebrachtes Mähgut 3 durch die Rechmittel 12 in Querrichtung zu einer Schwade 16 abgeführt werden und die Vorrichtung somit als Harke funktioniert (Figur 2). Um das Mähgut von den Aufnahmemitteln 4 zu den Rechmitteln 12 zu befördern sind dabei noch Weitergabemittel 17 angebracht, die in dem gezeigten Beispiel von denselben Bürsten 11 gebildet werden, die auch die Schüttelmittel 9 bilden. Dadurch wird das von den Aufnahmemitteln 4 nach oben gebrachte Mähgut gegen die Rechmittel 12 geworfen. Diese sind dazu in ihrer Betriebsstellung einigermaßen schräg aufgestellt, um zu vermeiden, daß das Mähgut darüber hinweg geworfen wird, während außerdem die Rechmittel 12 an ihrer Rückseite von einem aufstehenden Rand begrenzt werden.

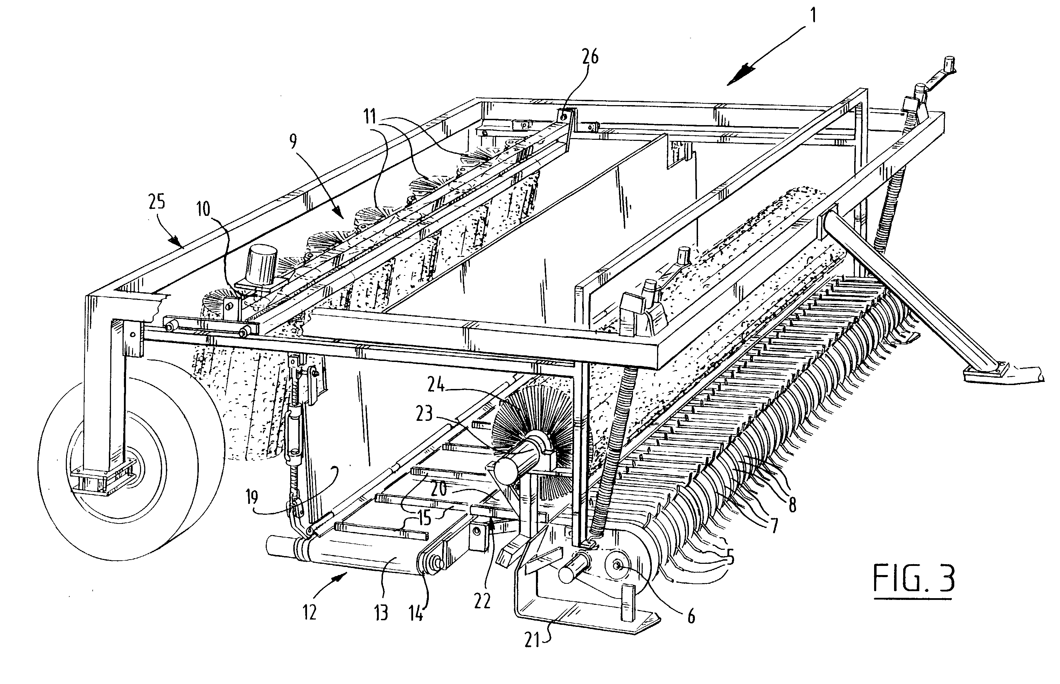

Bei einer alternativen Ausführungsform der Vorrichtung 1 (Figur 3) sind die Rechmittel 12 nicht nur schwenkbar in dem Rahmen aufgenommen, sondern sind diese weiter mit einer schwenkbaren Abdeckplatte 19 versehen, die ein Bestandteil der Führungsmittel 20 bilden. Die Schüttelmittel 9 sind dabei schwenkbar um eine liegende Achse 26 zwischen einer Betriebsstellung, in der sie sich gerade über der Abdeckplatte 19 befinden und zum Schütteln des Mähguts tätig sind, und einer Ruhestellung, in der sie weggeklappt sind, und die Rechmittel 12 ihre Betriebsstellung einnehmen und somit tätig sind. Bei dieser Ausführungsform sind gesonderte Weitergabemittel angebracht, in Form einer um eine liegende Achse 23 rotierbaren Bürste 24.

## Patentansprüche

1. Vorrichtung zur Bearbeitung von auf dem Boden liegenden Mähgut, die mit einem verfahrbaren Rahmen (25) versehen ist, in der Fahrtrichtung gesehen an der Frontseite des Rahmens (25) angebrachten Mitteln (4) zum Aufnehmen des Mähguts (3) vom Boden (2) und im Abstand über dem Boden (2) in dem Rahmen (25) enthaltenen bewegbaren Bearbeitungsmitteln, wobei der Rahmen (27) an die Aufnahmemittel (4) anschließende Führungsmittel (20) aufweist, und die Bearbeitungsmittel mit den Führungsmitteln (20) zusammenwirkende Schüttelmittel (9) umfassen sowie Rechmittel (12) zum in Querrichtung erfolgenden Abführen des aufgenommenen Mähguts und zum Sammeln des aufgenommenen Mähguts, (3) in einer Schwade, **dadurch gekennzeichnet, daß** die Rechmittel (12) zwischen einer Ruheposition, in der das aufgenommene Mähgut (3) die Rechmittel (12) passiert, und einer Betriebsposition, in der das Mähgut (3) von den Rechmitteln (12) in Querrichtung abgeführt wird verstellbar sind.

2. Vorrichtung nach Anspruch 1, **dadurch gekennzeichnet, daß** die Aufnahmemittel (4) eine Reihe um wenigstens eine liegende Achse (6) rotierbare Finger (5) aufweisen.

3. Vorrichtung nach Anspruch 2, **dadurch gekennzeichnet, daß** die Finger (5) ein oder mehrere Bürstenelemente bilden.

4. Vorrichtung nach einem der vorhergehenden Ansprüche, **dadurch gekennzeichnet, daß** die Schüttelmittel (9) eine Reihe um wenigstens eine Achse (10) rotierbare Finger aufweisen.

5. Vorrichtung nach Anspruch 4, **dadurch gekennzeichnet, daß** die Finger ein oder mehrere Bürstenelemente (11) bilden.

6. Vorrichtung nach Anspruch 5, **gekennzeichnet durch** mehrere um relativ zueinander parallele, stehende Achsen (10) rotierbare Bürstenelemente (11).

7. Vorrichtung nach einem der vorhergehenden Ansprüche, **dadurch gekennzeichnet, daß** die Rechmittel (12) schwenkbar in dem Rahmen (25) aufgenommen sind.

8. Vorrichtung nach einem der vorhergehenden Ansprüche, **dadurch gekennzeichnet, daß** die Rechmittel (12) eine bewegbare Abdeckplatte (19) aufweisen.

9. Vorrichtung nach einem der vorhergehenden Ansprüche, **gekennzeichnet durch** zwischen den Aufnahmemitteln (4) und den Rechmitteln (12) angebrachte Weitergabemittel (17).

10. Vorrichtung nach Anspruch 9, **dadurch gekennzeichnet, daß** die Weitergabemittel (17) eine Reihe um wenigstens eine Achse (10;23) rotierbare Finger (11;24) aufweisen,

11. Vorrichtung nach Anspruch 10, **dadurch gekennzeichnet, daß** die Weitergabemittel (17) und die Schüttelmittel (9) als ein Ganzes ausgeführt sind.

## Claims

1. Device for treating mown material lying on the ground, provided with a movable frame (25), means (4) for picking up the mown material (3) from the ground (2) mounted on the front of the frame (25) as viewed in the direction of travel and movable processing means contained in the frame (25) at a distance above the ground (2), the frame (27) comprising guide means (20) adjacent to the pick-up means (4), and the processing means including shaking means (9) cooperating with the guide means (20), as well as raking means (12) for discharging the mown material picked up in the transverse direction and collecting the mown material (3) picked up in a swath, **characterised in that** the raking means (12) are adjustable between a rest position in which the mown material (3) picked up passes through the raking means (12) and an operating position in which the mown material (3) is discharged in the transverse direction by the raking means (12).

2. Device according to claim 1, **characterised in that** the pick-up means (4) comprise a series of fingers (5) rotatable about at least one horizontal axis (6).

3. Device according to claim 2, **characterised in that** the fingers (5) form one or more brush elements.

4. Device according to one of the preceding claims, **characterised in that** the shaking means (9) comprise a series of fingers rotatable about at least one axis (10).

5. Device according to claim 4, **characterised in that** the fingers form one or more brush elements (11).

6. Device according to claim 5, **characterised by** a plurality of brush elements (11) rotatable about parallel vertical axes (10).

7. Device according to one of the preceding claims, **characterised in that** the raking means (12) are swivel-mounted in the frame (25).

8. Device according to one of the preceding claims, **characterised in that** the raking means (12) comprise a movable cover plate (19).

9. Device according to one of the preceding claims, **characterised by** transfer means (17) provided between the pick-up means (4) and the raking means (12).

10. Device according to claim 9, **characterised in that** the transfer means (17) comprise a series of fingers (11; 24) rotatable about at least one axis (10; 23).

11. Device according to claim 10, **characterised in that** the transfer means (17) and the shaking means (19) are formed as one unit.

## Revendications

1. Dispositif pour le traitement d'une récolte située sur le sol, qui comporte un châssis mobile (25), des moyens (4) qui, vu dans la direction de déplacement, sont montés sur le côté avant du châssis (25) pour recevoir la matière à récolter (3) à partir du sol (2) et des moyens de traitement déplaçables, qui sont contenus dans le châssis (25) en étant situés à distance au-dessus du sol (2), le cadre (27) comportant des moyens de guidage (20) qui se raccordent aux moyens de réception (4), et les moyens de traitement comprenant des moyens de secouage (9) coopérant avec les moyens de guidage (20), ainsi que des moyens formant râteau (12) servant à réaliser l'évacuation, dans la direction transversale, de la matière récoltée reçue et servant à collecter la matière récoltée reçue (3) dans un andain, **caractérisé en ce que** les moyens formant râteau (12) sont réglables entre une position de repos, dans laquelle la matière récoltée reçue (30) franchit les moyens formant râteau (12), et une position de fonctionnement, dans laquelle la matière récoltée (3) est évacuée par les moyens formant râteau (12) dans une direction transversale.

2. Dispositif selon la revendication 1, **caractérisé en ce que** les moyens de réception (14) comprennent une série de doigts (5) qui tournent autour d'au moins un axe horizontal (6).

3. Dispositif selon la revendication 2, **caractérisé en ce que** les doigts (5) forment un ou plusieurs éléments de brosse.

4. Dispositif selon l'une des revendications précédentes, **caractérisé en ce que** les moyens de secouage (9) comportent une série de doigts pouvant tourner autour d'au moins un axe (10).

5. Dispositif selon la revendication 4, **caractérisé en ce que** les doigts forment un ou plusieurs éléments de brosses (11).

6. Dispositif selon la revendication 5, **caractérisé par** plusieurs éléments de brosse (11) pouvant tourner autour d'axes fixes (10) parallèles entre eux.

7. Dispositif selon l'une quelconque des revendications précédentes, **caractérisé en ce que** les moyens formant râteau (12) sont logés dans le cadre (25).

8. Dispositif selon l'une quelconque des revendications précédentes, **caractérisé en ce que** les moyens formant râteau (12) possèdent une plaque de recouvrement mobile (19).

9. Dispositif selon l'une quelconque des revendications précédentes, **caractérisé par** des moyens de transport (17) disposés entre les moyens de réception (4) et les moyens formant râteau (12).

10. dispositif selon la revendication 9, **caractérisé en ce que** les moyens de transfert (17) comportent une série de doigts (11; 24) pouvant tourner autour d'au moins un axe (10; 23).

11. Dispositif selon la revendication 10, **caractérisé en ce que** les moyens de transfert (17) et les moyens de secouage (9) sont réalisés sous la forme d'un ensemble.
